(19) 

Europäisches
Patentamt
European
Patent Office
Office européen
des brevets

(11) **EP 2 302 862 A1**

(12) **EUROPEAN PATENT APPLICATION**
published in accordance with Art. 153(4) EPC

(43) Date of publication:
**30.03.2011 Bulletin 2011/13**

(51) Int Cl.:
***H04L 29/06*** *(2006.01)*

(21) Application number: **08783506.2**

(22) Date of filing: **11.07.2008**

(86) International application number:
**PCT/CN2008/001300**

(87) International publication number:
**WO 2010/003275 (14.01.2010 Gazette 2010/02)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Alcatel Lucent**
**75008 Paris (FR)**

(72) Inventors:
• **WANG, Dongyao**
**Shanghai 201206 (CN)**

• **SHEN, Gang**
**Shanghai 201206 (CN)**
• **ZHANG, Kaibin**
**Shanghai 201206 (CN)**
• **LENG, Xiaobing**
**Shanghai 201206 (CN)**

(74) Representative: **Kohler Schmid Möbus**
**Patentanwälte**
**Ruppmannstraße 27**
**70565 Stuttgart (DE)**

(54) **A METHOD AND APPARATUS FOR PROCESSING PROTOCOL DATA UNITS IN A WIRELESS NETWORK**

(57)    A method and apparatus for processing protocol data units in network devices of wireless networks are provided. In this solution, data corresponding to different logical connections could be carried in the same protocol data unit. As a result, the overheads of processing information in a system that is irrelevant to data are reduced, especially the overheads for MAC Headers and Sub-headers.

Figure 8

EP 2 302 862 A1

## Description

Technical field

The invention relates to broadband wireless access techniques, more particularly, relates to a method and apparatus for processing protocol data units in a wireless network.

Background

To drive the development of Broadband Wireless Access, IEEE802.16 working group has been established by Institute of Electrical and Electronics Engineering (IEEE) in 1999 with the aim of developing Broadband Wireless Access technology.

The standard of IEEE 802.16-2001 is officially issued in Dec, 2001 by IEEE, which proposes a technical standard for WMAN, focusing more on the application of Fixed Network.

With the progress of wireless communication and the demands from the customer, only the Broadband Wireless Access service without a property of mobility can get a broader market. IEEE 802.16 working group proposes a standard version of IEEE 802.16e in order to present a Broadband Wireless Access solution being capable of both high speed data transmission and high speed mobility support. With a capability of supporting a service of mobile high speed data transmission, IEEE 802.16e is deemed as the only technology of next generation Broadband Wireless Access to compete with 3G technology.

MAC layer is structured as follows in IEEE 802.16e, every MAC protocol data unit (MAC PDU) consists of three domains, each MAC PDU includes a MAC header with a length of 48 bits; the domain next to the MAC header is Payload, the data length in the Payload is variable, and if the length of Payload is nonzero, then the Payload may comprises 0 or more MAC sub-header and 0 or more MAC service data unit(SDU) and/or SDU Fragment; optionally, there is a CRC of 32 bits following to Payload. There are defined 2 kinds of header format in the MAC of IEEE 802.16: Generic header and bandwidth request header. The Generic MAC PDU differs from Bandwidth request MAC PDU by the fact that there is no Payload in the Bandwidth request MAC PDU.

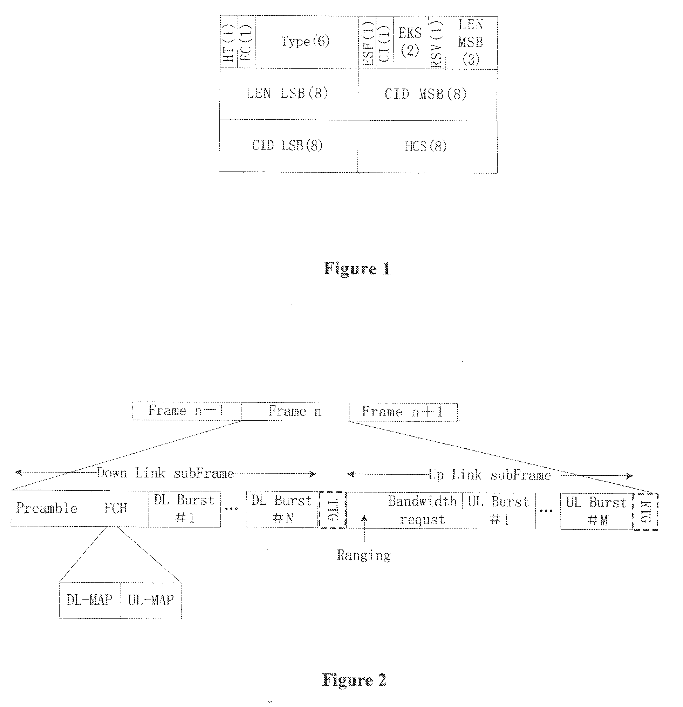

The format of Generic MAC header is illustrated as Fig.1, wherein, the formatting and usage of the 48-bit information is listed as follows:

HT, 1 bit, used for indicating header type, 0: the MAC header is a Generic header;
EC, 1 bit, used for indicating encryption control, 0: no encryption for payload, and 1: encryption for payload;
Type, 6bit, used for indicating types of payload and its sub-header;
ESF, 1bit, used as extended sub-header field;

RSV, 1bit, reserved for the capability of extension;
CI, 1 bit, used for indicating the existence of CRC;
EKS, 2 bit, used as encryption key sequence;
LEN, 11bit, used for indicating the length of MAC PDU including MAC header and CRC, i.e. maximum length allowance is 2048 bytes;
CID, 16 bit, used as a connection identifier;
HCS, 8 bit, used as a header check sequence, for checking the errors in the header.

The MAC header of Broadband request is also 48-bits long, although its format has a little difference with that of a normal MAC header, its format also includes 16-bits CID information and 8-bits HCS information.

The PHY of IEEE 802.16e consists of Transmission Convergence Sublayer (TCL) and physical medium dependent Sublayer(PMD), the Physical Layer commonly mentioned mainly refers to PMD. Two duplex manners are defined in the Physical Layer: TDD and FDD, which both utilizing burst data transmission format, this transmission mechanism supports the self-adaptive burst service data, and transmission parameter (modulation mode, coding mode and so on) can be adjusted dynamically, which however needs the collaboration with MAC layer.

The typical frame length supported in the Physical Layer of IEEE 802.16 is 5ms, wherein the physical slot(PS) is the smallest bandwidth management unit within the Physical Layer. The Downlink Physical Layer starts with a preamble which is introduced for synchronization of the Physical Layer; the preamble is followed by a frame control header(FCH) which includes broadcast control info for indicating the parameter and length of one or more bursts immediately following the FCH, and content involved in the burst(s) is the data to be transmitted.

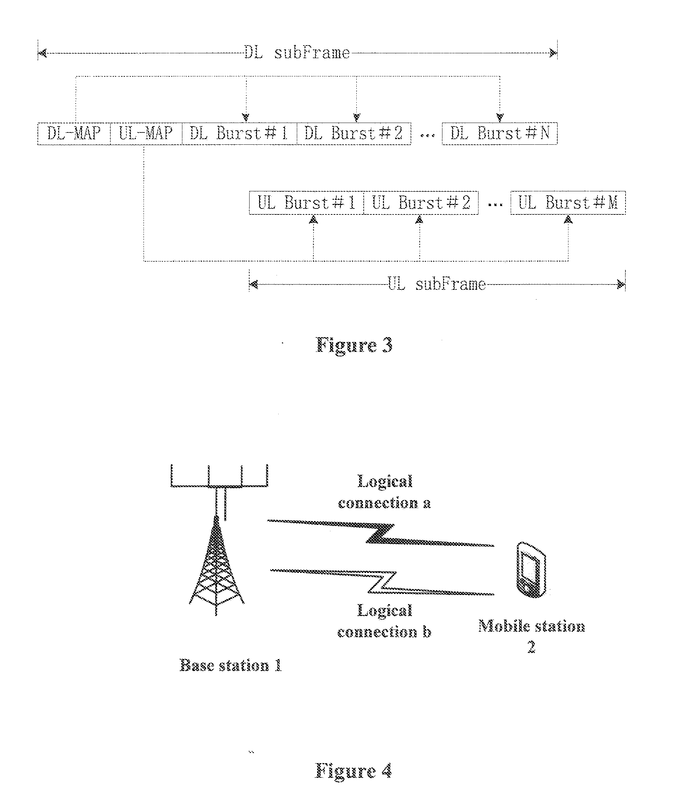

IEEE 802.16 supports both TDD and FDD mode. Fig.2 and Fig.3 shows respectively the diagrams of DL/UL signal structure as TDD and FDD mode is utilized in IEEE 802.16. It is merely for exemplarily distinguishing different bursts, and not intended to mean that TDM mode must be adopted among the different bursts; and in OFDM manner, different bursts may correspond to different sub-carriers in the same slot. While using TDD mode, transmission/receiving transmission gap(TTG) and receiving/transmission transmission gap(RTG) are inserted respectively between the UL/DL channel of each frame, so as to switch the sub-frame of the UpLink and DownLink. For the Downlink, the Base station sends data to the mobile station(MS) in the manner of TDM or OFDMA, each MS determines when to receive or send the data through Downlink mobile application part (DL-MAP) or Uplink mobile application part (UL-MAP) after receiving broadcast. Other than the broadcast, the base station may also send messages to one or one group of MS in the manner of unicast or multicast.

Currently, the following problems lie in the structure of MAC PDU in IEEE 802.16e:

1) High overhead. 6 bytes is occupied by MAC header, of which part could be saved.

2) The MAC service data unit (SDU) from only one Link is encapsulated into a current MAC PDU, which may increase the overhead. It is necessary to construct Multiple MAC PDUs and utilize multiple groups of MAC header and CRC, if a MS set up two or more DL logic connections with the base station and the base station has to send respective MAC SDUs to the two or more DL logic connections.

3) in some cases, it is difficult for receiving device to locate each MAC PDU. When there exists 2 continuous MAC PDU within the receiving buffer, if some error occurs to the header of the previous MAC PDU, the length information therein about the MAC PDU is unreliable, thus, it is difficult to locate the next MAC PDU.

Summary of the invention

To solve the abovementioned technical problem in the prior art, there is provided a solution for processing protocol data units in the apparatus of the wireless network.

According to a first aspect of the invention, there is provided a method, in a network device of a wireless network, for configuring a protocol data unit, comprising steps of: a. judging whether to assign data of different logic connections to be sent to a same counterpart device into a current protocol data unit; b. packaging the data of different logic connections to be sent to the same counterpart device and connection identifier information for indicating the logic connections into the current protocol data unit, if the data of different logic connections to be sent to the same counterpart device is needed to be assigned into the current data protocol unit.

According to a second aspect of the invention, there is provided a method, in a network device of a wireless network, for parsing a received data demodulated from a received burst, comprising steps of: A. decomposing the received data into protocol data units; B. identifying data packages in the protocol data units according to length information of the data packages; C. mapping the data packages to corresponding logic connections, according to connection identifier information of the data packages.

According to a third aspect of the invention, there is provided a data configuring apparatus, in a network device of a wireless network, for configuring a protocol data unit, comprising: a first judging means, for judging whether to assign data of different logic connections to be sent to a same counterpart device into a current protocol data unit; a data packaging means, for packaging the data of different logic connections to be sent to the same counterpart device and connection identifier information for indicating the logic connections into the current protocol data unit, if the data of different logic connections to be sent to the same counterpart device is needed to be assigned into the current data protocol unit.

According to a fourth aspect of the invention, there is provided a data parsing apparatus, in a network device of a wireless network, for parsing a received data demodulated from a received burst, comprising: a first decomposing means, for decomposing the received data into protocol data units; a data package identifying means, for identifying data packages in the protocol data units according to length information of the data packages; a mapping means, for mapping the data packages to corresponding logic connections, according to connection identifier information of the data packages.

In the solution of the present invention, the data in correspondence to different logic connections may be carried within a single protocol data unit, thus, system overhead can be saved, and processing device of the receiver can be simplified according to some preferable embodiments.

Brief description of the drawings

Features, aspects and advantages of the present invention will become more obvious by reading the following description of non-limiting embodiments with the aid of appended drawings.

Figure 1 shows a structure diagram of MAC header in the MAC PDU of IEEE802.16;

Figure 2 shows a diagram of the diagrams of DL/UL signal structure as TDD mode is adopted for IEEE 802.16.

Figure 3 shows a diagram of the diagrams of DL/UL signal structure as FDD mode is adopted for IEEE 802.16.

Figure 4 shows a diagram of Broadband Wireless network according to one embodiment of the present invention;

Figure 5 shows a structure diagram of PDU header according to one embodiment of the present invention;

Figure 6 shows a structure diagram of sub-header of the data packages in PDU according to one embodiment of the present invention;

Figure 7 shows another structure diagram of sub-header of the data packages in PDU according to one embodiment of the present invention;

Figure 8 shows a flowchart of the method, in a network device of a wireless network, for configuring a protocol data unit according to one embodiment of the present invention;

Figure 9 shows a flowchart of the method, in a network device of a wireless network, for parsing a received data demodulated from a received burst according to one embodiment of the present invention;

Figure 10 shows a block diagram of a network device in a wireless network according to one embodiment of the present invention;

Wherein, same or similar reference numerals refer to the same or similar steps or means (module).

Detailed description of embodiments

Figure 4 shows a diagram of Broadband Wireless network according to one embodiment of the present invention. As will be appreciated by those skilled in the art, the shown network may be WiMAX network or Wi-Fi network, and not limited thereto. As shown in Fig.4, the Broadband Wireless network comprises Base station μ1 and Mobile station 2, with the logic connections a and b established therebetween. Merely for convenience of depicting, data transmission and parsing are introduced exemplarily between base station and MS, however, those skilled in the art can spread to apply, without need of creative work, the present invention into the data transmission/parsing between Base station or wireless access device equivalent thereto and relay station (or its equivalent), or between relay station (or its equivalent) and MS without departing from the protection scope of the present invention.

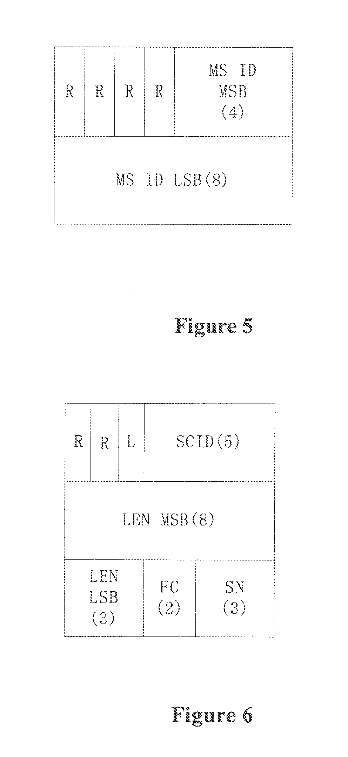

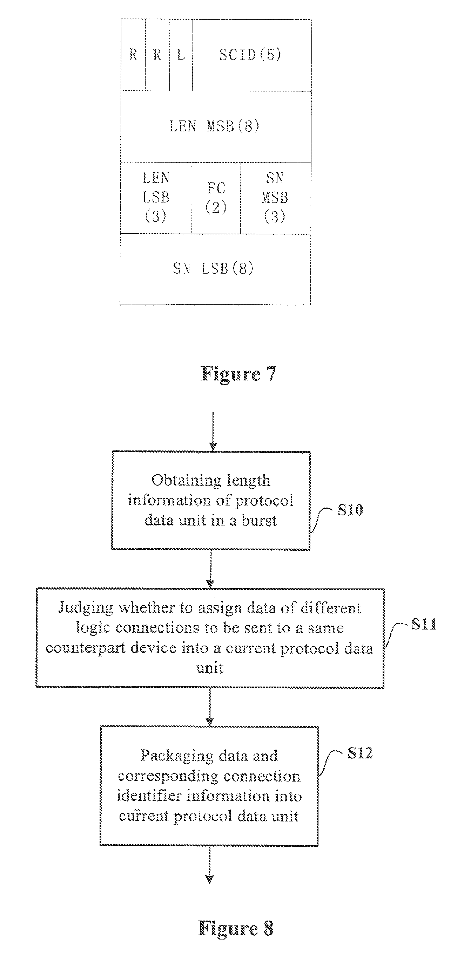

Figure 5 shows a structure diagram of PDU header according to one embodiment of the present invention. Fig. 6 shows a structure diagram of sub-header of the data packages in PDU according to one embodiment of the present invention. Figure 7 shows another structure diagram of sub-header of the data packages in PDU according to one embodiment of the present invention.

The present invention is described from a system level in combination with Fig.1 to Fig.7.

As shown in Fig.2, Fig.3, Fig.4, for the current version IEEE 802.16 standard, the Downlink Physical Layer starts with a preamble used for synchronization of the Physical Layer; the preamble is followed by a frame control header(FCH) which includes broadcast control info for indicating the parameter and length of one or more bursts immediately following the FCH, and content involved in the burst(s) is the data to be transmitted. FCH further comprises DownLink mobile application part (DL-MAP) or UpLink mobile application part (UL-MAP) . Normally, both preamble and FCH are broadcasted by Base station 1. After MS 2 receives preamble, adjust the local signal, and keep the synchronization of PHY layer signal between Base station 1 and itself. After MS 2 receives FCH, it determines, according to the DL-MAP or UL-MAP therein, when to receive or send the data, namely, determines the time-frequency resource occupied by the UL/DL burst assigned to MS 2.

For the current version IEEE 802.16 standard, each burst comprises one or more MAC PDU. Each MAC PDU consists of 3 parts, and each MAC PDU comprises a MAC header with a fixed length of 48-bits. MAC header is followed by a Payload, and optionally, there is a CRC of 32 bits following Payload. The format for the two types of MAC header (i.e. generic header and bandwidth request header) defined for IEEE 802.16 all comprises 16-bits CID and 8-bits HCS information. That is, according to the current standard of IEEE802.16e, a single MAC PDU only carries the data corresponding to one logic connection. As there exists 2 logic connections a and b between the Base station 1 and MS 2, even if the amount of data to be transmitted in correspondence to each logic connection is small, it is still necessary to respectively generate a MAC PDU for transmission for logic connections a and b.

In the solution of the present invention, preferably, the MAC header of protocol data unit comprises no 16-bits CID information any more. As there exists multiple logic connections between the Base station 1 and MS 2, the data corresponding to the multiple logic connections can be encapsulated into one protocol data unit, such that the overhead for header and CRC can be saved. Correspondingly, the header of protocol data unit can be embodied with the structure shown in Fig.5.

As shown in Fig.5, the header of protocol data unit comprises four R fields with 1-bit length and one MS ID field with 12-bits length. R fields are reserved bits and may be used for other purpose, for example a header checking code. MS ID is used for identifying which MS that the protocol data unit belongs to. The length of MS ID depends on the service capability of the Base station, for instance, a length of 12-bits means that the Base station can support 4096 active MS. Those skilled in the art can readily appreciate that the involved contents, the arrangement of the fields and the length of each field of the header structure of protocol data unit shown in Fig.5 are just demonstrated exemplarily and not intended to be limited to.

Base station 1 or MS 2 may encapsulate the data packages in correspondence to different logic connections into a single protocol data unit. Herein the data packages may be SDU corresponding to one logic connection or a fragment thereof. BS 1 or MS 2 generate a sub-header for each data package for indicating relative information of the data package, and encapsulate a data package and its corresponding sub-header into one protocol data unit.

Figure 6 and Figure 7 respectively show a structure diagram of sub-header of the data packages in PDU according to respective embodiment of the present invention.

As shown in Fig.6, the length of sub-header is 3 bytes amounting to 24bits, which comprises:

R, 2bits, reserved for other purpose;
L, 1 bit, used for indicating whether current data package is last data package of the current protocol data unit;
SCID, 5 bits, used as connection identifier for indicating the logic connection corresponding to the current data package; within the combination of a BS and a MS, for instance, BS 1 and MS 2, there is a different identifier for different logic connection; and identifier may be reused among the different combinations between BS and MS.

LEN, 11bits used for indicating corresponding data package length, 11-bits length means maximum length allowance is 2048 bytes; generally, data package and its sub-header are regarded as a whole, therefore LEN indicates the total length.

FC, 2 bit, used for indicating segment state of the corresponding data package; for instance, the FC field is set to 00 in case of no fragmentation, that is a complete service data package, 11 if the data package is the last fragment of the corresponding service data unit, otherwise if middle fragment.

SN: 3bits, used for indicating Sequence number of the corresponding MAC SDU fragment; for instance, SN is set to be 000 if the data package is a complete service data unit; SN is set to be 011 if the data package is the third fragment of the corresponding MAC SDU.

Structure of the sub-header shown in Fig.7 is assigned with a longer SN field of 11bits, as compared with that shown in Fig.6

Those skilled in the art can readily appreciate that the involved contents, the arrangement of the fields and the length of each field of the header structure of protocol data unit shown in Fig.6 and Fig.7 are just demonstrated exemplarily and not intended to be limited to.

In present invention, one burst means the transmission of a segment of data, with one or more slots and/or sub-carrier channels involved and same modulation mode adopted.

In the present invention, the encapsulation of protocol data unit takes the form that each data package and its sub-header are regarded as a whole and referred to as encapsulation unit hereafter, and every encapsulation unit starts with a sub-header, followed by corresponding data package, all the encapsulation units are arranged consecutively within the payload of the protocol data unit one after another.

Certainly, encapsulating manner of the protocol data unit may vary, for instance, the payload of the protocol data unit starts with multiple sub-header arranged consecutively, and the sub-header does not comprise length information of the corresponding data package any more but the start and end positions of the data package within the payload of the protocol data unit.

Without a loss of generality, the previous encapsulation manner is taken as an example for the following description of the present invention, namely, each data package and its sub-header is regarded as an entire encapsulation unit and all the encapsulation units are arranged consecutively within the payload of the protocol data unit one after another.

In the solution of the present invention, a burst can be assigned to be occupied by a MS exclusively. Frame control Header transmitted by BS 1 further includes DL-MAP or UL-MAP, wherein the DL-MAP or UL-MAP designates time-frequency resource block occupied by the UL/DL burst assigned to each MS, namely, MS 2 is informed about the time-frequency resource block occupied by its UL/DL burst exclusively after receiving the FCH. Herein, the MSD ID in the header of the protocol data unit can be further removed so as to save more system overhead.

As for BS 1, the transmitted FCH further comprises parameters of each burst following FCH, which includes specific time-frequency resource block occupied by every burst, modulation scheme and coding scheme applied to every burst. When the parameters of one burst are determined, total length of the data carried by the burst is determined correspondingly. For instance, OFDM is adopted in the system, and one burst occupies K slots, modulated in the mode of 16QAM, encoded in 1/2 encoding rate. According to the definition of IEEE802.16e standard, one slot includes 48 data sub-carriers. One data sub-carrier carries 2 bit with the modulation of 16QAM and 1/2 encoding rate. Therefore, the total length of the data carried by the burst is $2 \times 48 \times K$ bits, namely, $12 \times K$ bytes.

According to one preferable embodiment, BS 1 or MS 2 divides each protocol data unit within one burst based on a given value of length. For instance, T is the total length of data carried in the burst, S is the given value. Counting from the start data of the burst, every S bytes are divided as one protocol data unit until division has been applied to the end of the T bytes. Since T may not certainly be divided by S exactly, so the bytes in last protocol data unit may be less than S. And the given value of S may be fixed or adjusted according to the variation of the channel condition. Generally, the given value of S can be determined by wireless access controller, or other access controlling device, or BS 1. Typically, the given value of S may be adjusted in every frame with a period of duration of one PHY data frame as shown in Fig.2. While the individual given value for each burst within one frame may be the same or vary, and the given value is fixed for a burst of a frame. The given value is typically contained in the DL-MAP or UL-MAP of FCH.

The advantage of the above preferable embodiment lies in that, after receiving a burst generated in the above manner, receiver may reproduce each protocol data unit by a simply constructed parser device; namely, according to the given value in the FCH, receiver parses every S bytes from the start data of the data demodulated from the received burst as one protocol data unit until the parsing has been finished with the end of the data demodulated from the burst. Thus, when some error occurs to the data demodulated from the received burst, every protocol data unit after the length indicator can still be allocated even if some error occurs to the length indicator being indicative of the length of the protocol data unit.

Hereinabove, the present invention is described in detail from system level, and a description is as follows from the angle of transmitter and receiver with reference to Fig.4 and in combination with method flowchart.

Figure 8 shows a flowchart of the method, in a network device of a wireless network, for configuring a protocol data unit according to one embodiment of the present invention.

Hereafter, the first aspect of the present invention will be described by taking BS 1 as an example.

Firstly, in step S10, BS 1 obtains length information of protocol data unit carried in a burst. For instance, the burst is a DL burst to MS 2, typically, BS 1 will obtain length information of protocol data unit from WAC or other controlling device and inform MS 2 with the length information by FCH. BS 1 encapsulates every protocol data unit according to the length information, wherein every protocol data unit is arranged consecutively one after another and mapped consecutively into the data carried by the burst from the start.

Subsequently, BS 1 encapsulates the data to be transmitted to MS 2 into every protocol data unit of the burst. If the burst comprise the data of two logic connections between BS 1 and MS 2, for example the data of logic connections a and b, in step S11, BS 1 will judge whether to allocate the data corresponding to logic connections a and b into the current protocol data unit.

To be specific, step S11 further comprises two sub-steps:

In the first sub-step, BS 1 judges whether the margin of length of the current protocol data unit minus data length, to be assigned, of logic connection a is more than a predetermined value.

In the second sub-step, BS 1 determines to assign the data of logic connection a to be assigned and at least part of data of logic connection b into the current protocol data unit in the case that the margin of length of the current protocol data unit minus length of data of logic connection a to be assigned is more than the predetermined value.

If it is determined in step S11 that data of logic connection a to be assigned and partial of or all the data of logic connection b are needed to be assigned into the current protocol data unit, in Step S12, BS 1 encapsulate the above data and connection indicator for indicating the logic connection, to which the above data corresponds, into the current protocol data unit.

According to one embodiment of the present invention, the data corresponding to every logic connection in the form of data package and its corresponding sub-header constitute an encapsulation unit. Every encapsulation unit starts with a sub-header and the sub-header is followed by the corresponding data package, and there may follows other data, such as the data for checking. Every encapsulation unit is arranged consecutively, from the start position, within the payload of the protocol data unit one after another. Herein, the data package may be a SDU corresponding to a logic connection, or a fragment of the SDU. And the abovementioned connection indicator in Step S12 may specifically correspond to SCID information in sub-header as shown in Fig.6, Fig.7.

Those skilled in the art can readily appreciate that, the predetermined value in the first sub-step of step S11 shall be at least greater than the length of the sub-header in the encapsulation unit, otherwise, the current protocol data unit shall be incapable of carrying more encapsulation unit after it carries the encapsulation unit corresponding to connection a to be assigned.

If BS 1 determines that the margin of length of the current protocol data unit minus length of data of logic connection a to be assigned is more than the predetermined value, namely, when the remaining data length to be assigned of the current protocol data unit is greater than the predetermined value, then the current protocol data unit may carry more encapsulation units. Then, BS 1 compares the data length needed for packaging the SDU corresponding to connection b into encapsulation unit with remaining assignable data length of the current protocol data unit. If remaining assignable data length of the current protocol data unit is greater, BS 1 packages the entire SDU of connection b into an encapsulation unit and loads it into the current protocol data unit. On the contrary, BS 1 package a fragment of SDU of connection b into one encapsulation unit, and loads it into the current protocol data unit, typically, the length of the intercepted fragment is determined according to the remaining assignable data length of the current protocol data unit.

If the encapsulation unit carrying service data can not fully occupy the payload of one protocol data unit, then the remaining payload of the protocol data unit encapsulates a padding encapsulation unit with a length equal to the remaining payload. The sub-header of the padding encapsulation unit includes a special SCID information, the sub-header is followed by corresponding padding payload.

The process that BS 1 packages the encapsulation unit corresponding to connection a and the encapsulation unit corresponding to connection b into one protocol data unit is described according to the above embodiment that the burst exemplarily comprises two logic connections a and b between BS 1 and MS 2. However, according to the involved principle of the abovementioned description, in combination with prior art, those skilled in the art can readily appreciate the method that BS 1 packages encapsulation units corresponding to multiple logic connections into one protocol data unit in the case that a burst comprises more logic connections between BS 1 and MS 2

There exist other embodiments equivalent to the above S 11, S 12, of which one will be described as follows.

Taking it as an example that one burst is a DL burst from BS 1 to MS 2, BS 1 obtains length information of protocol data unit and informs MS 2 with the length information by FCH. And Subsequently, BS 1 encapsulates every protocol data unit according to the length information.

In this example, the burst comprises the data of three logic connections between BS 1 and MS 2, which correspond to logic connection a, b and c. The system prioritizes the three logic connections respectively, generally, the priority can be determined by a WAC or other access controlling device or BS 1. For example, logic connection a has the highest priority, and logic connection b has a lower priority, and the lowest priority goes to logic connection c. BS 1 packages the data of every logic connection into a succession of protocol data units according to respective priority of the logic connections.

Firstly, BS 1 compares the data length needed for packaging the SDU of logic connection a into encapsulation unit with data length of the payload of the first protocol data unit. If the length of the payload of the first protocol data unit is great enough, BS 1 packages the SDU of connection a into an encapsulation unit and loads it into the first protocol data unit. On the contrary, BS 1 package a fragment of SDU of connection a into one encapsulation unit, and loads it into the first protocol data unit. Then, BS 1 compares the data length needed for packaging the remaining data of SDU of logic connection a into encapsulation unit with data length of the payload of the second protocol data unit, and a processing similar to the above is applied until all the data of SDU of logic connection a is encapsulated into corresponding protocol data unit.

And then, BS 1 compares the data length needed for packaging the SDU of logic connection b into encapsulation unit with the remaining data length of the payload of the last protocol data unit carrying the data of logic connection a, and a processing similar to the above is applied until all the data of SDU of logic connection b is encapsulated into corresponding protocol data unit.

Subsequently, BS 1 applies a processing similar to the above to the data of SDU of logic connection c until all the data of SDU of logic connection c is encapsulated into corresponding protocol data unit.

By this way, depending on the length of every protocol data unit and the priority and length of every logic connection, one protocol data unit may carries the data from only one logic connection, or the data from two logic connections. For example, one protocol data unit may carry the data from both logic connection a and b or from both connection b and c; or, one protocol data unit may carry the data from three logic connections, wherein, the data from logic connection b shall be encapsulation unit including complete SDU, while the encapsulation units from logic connection a, c may merely include fragment of corresponding SDU.

According to a preferable embodiment of the first aspect of the present invention, BS 1 divides every protocol data unit in one burst according to a given value of length. For example, the total length of data carried in one burst is T bytes, and the given value is S. Counting from the start bit of the burst, every S bytes are divided as one protocol data unit until division has been applied to the end of the T bytes. Since T may not certainly be divided by S exactly, so the last protocol data unit may be less than S bytes.

If $\lceil \cdot \rceil$ is the functor of ceiling rouding, $\lfloor \cdot \rfloor$ is the functor of floor rounding, then for the burst, the number of the protocol data unit with a length of S bytes is $M = \lfloor T/S \rfloor$. The number of remaining protocol data unit is $N = \lceil T/S \rceil - \lfloor T/S \rfloor$, of which data length is $O = T - S \times M$, N may have the value of 0 or 1.

The given value of S may be fixed or adjusted according to the variation of the channel condition. Generally, the given value of S can be determined by wireless access controller, or other access controlling device, or BS 1. Typically, the given value of S may be adjusted in every frame with a period of duration of one PHY data frame as shown in Fig.2. While the individual given value for each burst within one frame may be the same or vary, the given value is fixed for some particular burst of one frame. The given value is typically contained in the DL-MAP or UL-MAP of FCH.

After receiving FCH, MS 2 may parse every protocol data unit according to the given value therein. Therefore, respective length information in the header of every protocol data unit can be further removed. BS 1 may use header format as shown in Fig.5, wherein, MS ID is used for indicating the MS to which one protocol data unit corresponds, that is, MS ID is the Characteristic Information of the MS to which the protocol data unit corresponds. The MS ID in the header and sub-header of every encapsulation unit are used for jointly indicating the logic connection to which the relevant data package corresponds. Those skilled in the art can readily appreciate that, in this case, one burst may carry a plurality of protocol data units corresponding to different MS respectively.

If the protocol data unit carrying service data does not fully fill one burst, then remaining payload of the burst is padded by one padding MAC PDU. The header of padding MAC PDU unit includes a special SCID information, the sub-header is followed by corresponding padding payload.

According to another embodiment of the first aspect of the present invention, a burst can be assigned to be occupied by a MS exclusively. For example, BS 1 designates, in the DL-MAP or UL-MAP of Frame control Header transmitted by BS 1, time-frequency resource block occupied by the UL/DL burst assigned to each MS, namely, MS 2 is informed about the time-frequency resource block occupied by its UL/DL burst exclusively after receiving the FCH. Herein, the MS ID in the header of the protocol data unit can be further removed so as to save more system overhead.

Hereinabove, a method in device of a broadband wireless network, for configuring a protocol data unit, is described by taking BS 1 as an example. And the first aspect of the present invention will be described by taking MS 2 as an example.

Firstly, in step S10, MS 2 obtains length information of protocol data unit carried in a burst. For instance, the burst is a UL burst to BS 1, typically, MS 2 obtains length information of protocol data unit from the received FCH. MS 2. MS 2 will encapsulate every protocol data unit according to the length information, every protocol data unit is arranged consecutively one after another and mapped consecutively, from the start bit, into the data carried by the burst.

Subsequently, MS 2 encapsulates the data, to be transmitted to BS 1, into every protocol data unit of the burst. If the burst comprise the data of two logic connections between BS 1 and MS 2, for example the data of logic connection a and b, then, in step S11, MS 2 judges whether to allocate the data corresponding to logic connection a and b into the same protocol data.

To be specific, step S11 further comprises two sub-steps:

In the first sub-step, MS 2 judges whether the margin of length of the current protocol data unit minus data length, to be assigned, of logic connection a is more than a predetermined value.

In the second sub-step, MS 2 determines to assign the data of logic connection a to be assigned and at least part of data of logic connection b into the current protocol data unit in the case that the margin of length of the current protocol data unit minus length of data of logic connection a to be assigned is greater than the predetermined value.

If it is determined, in step S11, that data of logic connection a to be assigned and partial of or all the data of logic connection b are needed to be assigned into the current protocol data unit, then in Step S12, MS 2 encapsulate the data and connection indicator for indicating the logic connection, to which the above data corresponds, into the current protocol data unit.

According to one embodiment of the present invention, the data corresponding to every logic connection in the form of data package and its corresponding sub-header constitute an encapsulation unit. Every encapsulation unit starts with a sub-header and the sub-header is followed by the corresponding data package, and there may follows other data, such as the data for checking. Every encapsulation unit is arranged consecutively, from the start position, within the payload of the protocol data unit one after another. Herein, the data package may be a SDU corresponding to a logic connection, or a fragment of the SDU. And the abovementioned connection indicator in Step S12 may specifically correspond to SCID information in sub-header as shown in Fig.6, Fig.7.

Those skilled in the art can readily appreciate that, the predetermined value in the first sub-step of step S11 shall be at least greater than the length of the sub-header in the encapsulation unit, otherwise, the current protocol data unit shall be incapable of carrying more encapsulation unit after it carries the encapsulation unit corresponding to connection a to be assigned.

If MS 2 determines that the margin of length of the current protocol data unit minus length of data of logic connection a to be assigned is greater than the predetermined value, namely, when the remaining assignable data length of the current protocol data unit is greater than the predetermined value, then the current protocol data unit may carry more encapsulation units. Then, MS 2 compares the data length needed for packaging the SDU corresponding to logic connection b into encapsulation unit with remaining assignable data length of the current protocol data unit. If remaining assignable data length of the current protocol data unit is greater, MS 2 packages the entire SDU of connection b into an encapsulation unit and loads it into the current protocol data unit. On the contrary, MS 2 package a fragment of SDU of connection b into one encapsulation unit, and loads it into the current protocol data unit, typically, the length of the intercepted fragment is determined according to the remaining assignable data length of the current protocol data unit.

If the encapsulation unit carrying service data can not fully occupy the payload of one protocol data unit, then the remaining payload of the protocol data unit encapsulates a padding encapsulation unit with an length equal to the remaining payload. The sub-header of the padding encapsulation unit includes a special SCID information, the sub-header is followed by corresponding padding payload.

The process that MS 2 packages the encapsulation unit corresponding to connection a and the encapsulation unit corresponding to connection b into one protocol data unit is described according to the above embodiment that the burst exemplarily comprises two logic connections a and b between BS 1 and MS 2. However, according to the involved principle of the abovementioned description, in combination with prior art, those skilled in the art can readily appreciate the method that MS 2 packages encapsulation units corresponding to multiple logic connections into one protocol data unit in the case that a burst comprises more logic connections between BS 1 and MS 2.

According to a preferable embodiment of the first aspect of the present invention, MS 2 divides every protocol data unit in one burst according to a given value of length. For example, the total length of data carried in one burst is T bytes, and the given value is S. Counting from the start bit of the burst, every S bytes are divided, by MS 2, as one protocol data unit until division has been applied to the end of the T bytes. Since T may not certainly be divided by S exactly, so the last protocol data unit may be less than S bytes. Typically, the given value is obtained by MS 2 from the received FCH.

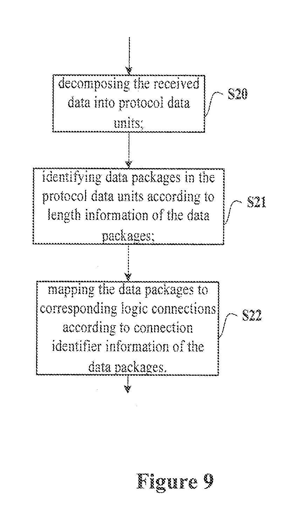

Figure 9 shows a flowchart of the method, in a network device of a wireless network, for parsing a received data demodulated from a received burst according to one embodiment of the present invention.

Description will be made concerning a second aspect of the present invention by taking MS 2 as an example.

Firstly, in step S20, MS 2 decomposes the received data demodulated from the received DL burst into protocol data units.

If header of every protocol data unit includes the corresponding length information of protocol data unit, then MS 2, above all, parses the first protocol data unit according to the corresponding length information in the header of the first protocol data unit, and in correspondence of which MS 2 locates the header of the second protocol data unit. Then, MS 2 parses the second protocol data unit according to the corresponding length information in the header of the second protocol data unit, and whereby locates the header of the third protocol data unit. By inference, MS 2 continues parsing until all protocol data units of the received burst are decomposed.

Secondly, in step S21, MS 2 identifies every data package in the protocol data units according to length information of the data packages.

Specifically, the data corresponding to every logic connection in the form of data package and the corresponding sub-header constitute an encapsulation unit. Every encapsulation unit starts with a sub-header and the sub-header is followed by the corresponding data package, and there may follows other data, such as the data for checking. Every encapsulation unit is arranged consecutively, from the start, within the payload of the protocol data unit one after another. Referring to the header data structure shown in Fig.6 or Fig.7, MS 2 firstly parses the first protocol data unit according to the corresponding LEN information in the header of the first encapsulation unit, and in correspondence of which, MS 2 locates the header of the second encapsulation unit. Then, MS 2 parses the second protocol data unit according to the corresponding LEN information in the header of the second encapsulation unit, and whereby locates the header of the third encapsulation unit. By inference, MS 2 continues parsing until all encapsulation units in the PDU are decomposed.

And then, in step S22, MS 2 maps every data package to corresponding logic connections, according to connection identifier information of every data package.

Specifically, MS 2 maps corresponding data package, according to the SCID information in the sub-header of every encapsulation unit, to logic connections which the SCID information corresponds to.

As shown in Fig.5, in one preferable embodiment according to the second aspect of the present invention, the header of every protocol data unit further includes a MS ID which is the Characteristic Information of the MS. The MS ID and the SCID information in the sub-header of every encapsulation unit are used for jointly indicating the logic connection which the relevant data package corresponds to. MS 2 maps corresponding data package to its corresponding logic connections, according to the MS ID in the header of one protocol data unit and the SCID information in the sub-header of every encapsulation unit.

According to a preferable embodiment of the present invention, the header of every protocol data unit does not comprise the corresponding length information. Every protocol data unit within one burst is divided according to a given value of length. MS2 obtains the given value of length from the FCH of the received current frame, and decomposes the received data demodulated from the received DL burst into protocol data units according to the given value. Counting from the start of the burst, every data chunk of the given length value are divided, by MS 2, as one data segment until division has been applied to the end of the T bytes or data length of remaining data is less than the given value of length, and each data segment is decomposed as a PDU. If the total length of received data is less than the given value of length, MS 2 decomposed the received data as one protocol data unit.

Hereinabove, the second aspect of the present invention is described by taking MS 2 as an example. Referring to the above description, the second aspect of the present invention will be described by taking BS 1 as an example.

Firstly, is step S20, BS 1 decomposes the received data demodulated from the received UL burst into protocol data units.

Secondly, in step S21, BS 1 identifies every data package according to length information of the data packages in the protocol data units.

Thirdly, in step S22, BS 1 maps every data package to the corresponding logic connections, according to the connection identifier information of every data package.

Specifically, BS 1 maps corresponding data package, according to the SCID information in the sub-header of every encapsulation unit, to logic connections which the SCID information corresponds to.

Referring to Fig.5, in another preferable embodiment according to the second aspect of the present invention, the header of every protocol data unit further includes a MS ID which is the Characteristic Information of the MS. The MS ID and the SCID information in the sub-header of every encapsulation unit are used for jointly indicating the logic connection which the relevant data package corresponds to. BS 1 maps corresponding data to its logic connections, according to the MS ID in the header of one protocol data unit and the SCID information in the sub-header of every encapsulation unit.

According to a preferable embodiment of the present invention, the header of every protocol data unit does not comprise the corresponding length information. Every protocol data unit within one burst is divided according to a given value of length. And generally, BS 1 informs MS 2 with the given value of length by means of FCH. BS 1 decomposes the received data demodulated from the received DL burst into protocol data units according to the given value.

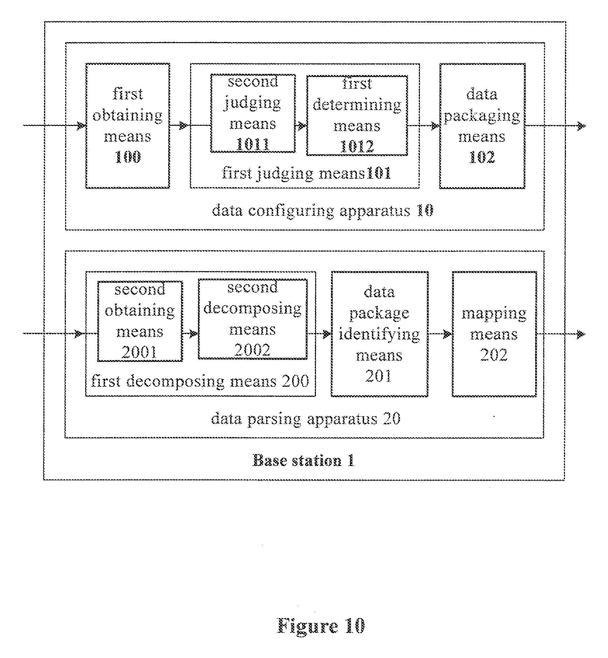

Figure 10 shows a block diagram of a network device in a wireless network according to one embodiment of the present invention.

According to a third aspect of the invention, there is provided a data configuring apparatus, in a network device of a wireless network, for configuring a protocol data unit. As shown in Fir.10, the data configuring apparatus 10 comprises: a first obtaining means 100, a first judging means 101 and a data packaging means 102. And in different embodiments of the present invention, the data configuring apparatus 10 may comprise part or all of the first acquiring means 100, the first judging means 101 and the data packaging means 102.

According to a fourth aspect of the invention, there is provided a data parsing apparatus, in a network device of a wireless network, for parsing a received data demodulated from a received burst. As shown in Fig.10, the data parsing apparatus 20 comprises: a first decomposing means 200, a data package identifying means 201, a mapping means 202.

Normally, a network device of a wireless network is equipped with both the data configuring apparatus 10 for generating protocol data unit and data parsing apparatus 20 for parsing a received data demodulated from a received burst. But in some special cases, a network device may have merely one of the above two apparatus equipped. As shown in Fig.10, BS 1 comprises both data configuring apparatus 10 and data parsing apparatus 20, those skilled in the art can readily appreciate that, MS 2 may also comprise data configuring apparatus 10 and data parsing apparatus 20.

The present invention will be described from the angle of device with reference to Fig.4 to Fig.9 and in combination with Fig.10.

As shown in Fig.4, two logic connections, namely logic connections a and b, are established between BS 1 and MS 2.

According to an embodiment of the present invention, in a burst, every PDU is arranged consecutively one after another and mapped continuously, from the start, into the data carried by the burst. The data corresponding to every logic connection in the form of data package and the corresponding sub-header constitute an encapsulation unit. Every encapsulation unit starts with a sub-header and the sub-header is followed by the corresponding data package, and there may follows other data, such as the data for checking. One protocol data unit may carry a plurality of encapsulation units. Every encapsulation unit is arranged consecutively, from the start, within the payload of the protocol data unit one after another. Herein, the data package may correspond to either SDU of a logic connection or a fragment of the SDU.

Referring to Fig.5, according to an embodiment of the present invention, protocol data unit header adopted by broadband wireless network comprises a length information of the protocol data unit and MS ID information, namely characteristic information of the MS; and sub-header of the encapsulation unit comprises a SCID information, namely the connection identifier information.

The MS ID information and SCID information are used for jointly indicating the logic connection which the relevant data package in the encapsulation unit corresponds to. Those skilled in the art can readily appreciate that, in this case, one burst may carry a plurality of protocol data units corresponding to different MS respectively.

Taking a DL burst from BS 1 to MS 2 as an example, respective processing applied by BS 1 and MS 2 to the burst is described as bellows.

In BS 1, first obtaining means 100 obtains length information of protocol data unit carried in a burst and informs MS 2 with the length information by FCH. Typically, the first obtaining means 100 of BS 1 obtains length information of protocol data unit from WAC or other controlling device.

Subsequently, in BS 1, data packaging means 102 encapsulates the data, to be transmitted to MS 2, into every protocol data unit of the burst. If the burst comprise the data of two logic connections between BS 1 and MS 2, for example the data of logic connection a and b, then, the first judging means 101 of BS 1 judges whether to allocate the data corresponding to logic connection a and b into the same one protocol data unit.

To be specific, the first judging means 101 further comprises a second judging means 1011 and a first determining means 1012. The second judging means 1011 is used for judging whether the margin of length of the current protocol data unit minus length of data of logic connection a to be assigned is more than a predetermined value. Those skilled in the art can readily appreciate that, the predetermined value herein, shall be at least greater than the length of the sub-header in the encapsulation unit, otherwise, the current protocol data unit shall be incapable of carrying more encapsulation unit after it carries the encapsulation unit corresponding to logic connection a to be assigned. If second judging means 1011 determines that the margin of length of the current protocol data unit minus data length, to be assigned, of logic connection a is greater than the predetermined value, then first determining means 1012 determines to assign the data of logic connection a to be assigned and at least part of data of logic connection b into the current protocol data unit. If first determining means 1012 determines the margin of length of the current protocol data unit minus the data length needed for encapsulation unit of the data corresponding to logic connection a to be assigned is greater than the predetermined value, namely, the remaining assignable data length of the current protocol data unit is greater than the predetermined value, then the current protocol data unit may carry more encapsulation units. Then, the second judging means 1011 compares the data length needed for packaging the SDU corresponding to logic connection b into encapsulation unit with remaining assignable data length of the current protocol data unit. If remaining assignable data length of the current protocol data unit is greater, the first determining means 1012 assigns the complete SDU of logic connection b into current protocol data unit. On the contrary, the first determining means 1012 determines to assign an interception fragment of SDU of connection b into current protocol data unit, typically, the length of the intercepted fragment is determined according to the remaining assignable data length of the current protocol data unit.

The data packaging means 102 packages according to data package assigned to every protocol data unit. The data packaging means 102 firstly packages every data package and the sub-header thereof into encapsulation unit, with a SCID information included in the sub-header; and then packages every encapsulation unit into the payload of corresponding protocol data unit, with the MS ID information and the length information of protocol data unit included inside the header of protocol data unit. The MS ID and the SCID information are used for jointly indicating the logic connection which the relevant data package in the encapsulation unit corresponds to.

Subsequently, BS 1 arranges every protocol data unit consecutively one after another and maps them, from the start, continuously into the data carried by the burst.

On the side of MS 2, after receiving the DL burst, MS 2 demodulates the data therefrom. And parameter for receiving and demodulation are obtained, by MS 2, from DL-MAP in the received FCH.

The first decomposing means 200 of MS 2 parses every protocol data unit from the received data.

The first decomposing means 200 parses the first protocol data unit according to the corresponding length information in the header of the first protocol data unit, and in correspondence of which locates the header of the second protocol data unit. Then, The first decomposing means 200 parses the second protocol data unit according to the corresponding length information in the header of the second protocol data unit, and whereby locates the header of the third protocol data unit. By inference, the first decomposing means 200 continues parsing until all protocol data units of the received burst are decomposed.

And then, the data package identifying means 201 of MS 2 identifies corresponding data package in every encapsulation unit.

Referring to the sub-header structure shown in Fig.6 or Fig.7, in the course of identifying every data package in a protocol data unit, firstly, data package identifying means 201 of MS 2 identifies the data packages of the first encapsulation unit according to the corresponding LEN information in sub-header of the first encapsulation unit, and in correspondence of which, locates the sub-header of the second encapsulation unit. Then, data package identifying means 201 identifies data package of the second encapsulation unit according to the corresponding LEN information in the sub-header of the second encapsulation unit, and whereby locates the sub-header of the third encapsulation unit. By inference, the data package identifying means 201 of MS 2 continues identifying until all data packages of the protocol data unit are identified.

Then, mapping means 202 of MS 2 maps every data package to its corresponding logic connections, according to the MS ID information in the header of a protocol data unit and the SCID information in the sub-header of every data package of the protocol data unit.

By taking a DL burst from BS 1 to MS 2 as an example, respective processing applied by BS 1 and MS 2 to the burst is described as above.

According to another embodiment of the present invention, a burst can be assigned to be used exclusively by a MS. For example, BS 1 designates, in the DL-MAP or UL-MAP of Frame control Header transmitted by BS 1, time-frequency resource block occupied by the UL/DL burst assigned to MS 2, namely, MS 2 is informed about the time-frequency resource block exclusively occupied by its UL/DL burst after receiving the FCH. Herein, the MS ID information in the header of the protocol data unit can be further removed so as to save more system overhead.

According to a preferable embodiment of the present invention, BS 1 divides every protocol data unit in the DL burst transmitted to MS 2 according to a given value of length.

For example, the total length of data carried in the DL burst is T bytes, and the given value is S. Counting from the start of the burst, every S bytes are divided, by BS 1, as one protocol data unit until division has been applied to the end of the T bytes. Since T may not certainly be divided by S exactly, so the last protocol data unit may be less than S bytes.

Specifically, the first obtaining means 100 of BS 1 may obtains the given value and informs MS 2 therewith through FCH. Generally, the given value of S can be determined by wireless access controller, or other access controlling device and then the first obtaining means 100 of BS 1 obtains the given value of length from wireless access controller or other access controlling device. Certainly, BS 1 may also determine the given value of length by itself. And the given value of S may be fixed or adjusted according to the variation of the channel condition. Typically, the given value of S may be adjusted periodically in every frame with a period of duration of one PHY data frame as shown in Fig.2. The given value is typically contained in the DL-MAP or UL-MAP of FCH. The individual given value for each burst within one frame may be the same or different. In other words, protocol data unit may be divided by different given value for the UL burst and DL burst corresponding to MS 2. For UL burst corresponding to MS 2, division of protocol data unit is performed by MS 2, wherein the used given value is obtained from the received FCH. And the given value S is fixed for one particular burst of a frame.

The first decomposing means 200 of MS 2 further comprises a second obtaining means 2001, a second decomposing means 2002. After MS 2 receives a FCH, second obtaining means 2001 obtains the given value from FCH. After MS 2 receives the DL burst, it demodulates the receiving data therefrom. And parameter for receiving and demodulating are obtained, by MS 2, from DL-MAP in the received FCH. From the start data of the received data, the second decomposing means 2002 of MS 2 divides every data chunk with the length of the given value into a segment until division of the received data is finished or the length of remaining data is less than the given length. The second decomposing means 2002 is used for parsing every data segment into protocol data units respectively. In the case that total length of the received data is less than the given value, the second decomposing means 2002 of MS 2 parses the received data into a singular protocol data unit

In case of UL burst from MS 2 to BS 1, data configuring apparatus 10 of MS 2 generates every protocol data unit in the UL burst; after BS 1 receives the UL burst and demodulates corresponding received data, the data parsing apparatus 20 thereof parses corresponding service data out of the received data. Respective processing applied by BS 1 and MS 2 to the UL burst is similar to the abovementioned processing applied by burst BS 1 and MS 2 to the DL burst. With Reference to the abovementioned description, those skilled in the art can readily appreciate the processing respectively applied by burst BS 1 and MS 2 to the UL burst, and no redundant description is given herein.

The embodiments of the present invention have been described above. It is to be understood by those skilled in the art that the present invention is not limited to the above specific embodiments, specific systems, devices and protocols. Various modifications or alterations can be made by those skilled in the art without departing from the scope as defined by the appended claims.

**Claims**

1. A method, in a network device of a wireless network, for configuring a protocol data unit, comprising steps of:

    a. judging whether to assign data of different logic connections to be sent to a same counterpart device into a current protocol data unit;
    b. packaging said data of different logic connections to be sent to said same counterpart device and connection identifier information for indicating said logic connections into said current protocol data unit if said data of different logic connections to be sent to said same counterpart device is needed to be assigned into said current data protocol unit.

2. A method as claimed in claim 1, wherein said different logic connections comprise a first logic connection and a second logic connection;
    wherein before step a, the method further comprises a step of:

l. obtaining length information of at least one protocol data unit carried in a burst;
wherein said step a further comprises:

    a1. judging whether the margin of length of said current protocol data unit minus length of data of said first logic connection to be assigned is more than a predetermined value;
    a2. determining to assign said data of said first logic connection to be assigned and at least part of data of said second logic connection into said current protocol data unit in the case that said margin of length of said current protocol data unit minus length of data of said first logic connection to be assigned is more than said predetermined value.

3. A method as claimed in claim 2, wherein said step l comprises:

    determining said length information of each protocol data unit carried in said burst, based on a given value and total length of data carried in said burst;
    wherein length information of first M protocol data units in said burst is determined as said given value, and length information of last N protocol data units in said burst is determined as O, wherein O, M, N are given by following equations:

$$M = \lfloor T/S \rfloor;$$

$$N = \lceil T/S \rceil - \lfloor T/S \rfloor;$$

$$O = T - S \times M;$$

    wherein, T is said total length of data carried in said burst, S is said given value, $\lceil \cdot \rceil$ is the functor of ceiling rouding, $\lfloor \cdot \rfloor$ is the functor of floor rounding.

4. A method as claimed in claim 2 or 3, wherein said network device is a base station, said burst is a downlink burst for carrying data to be sent to a mobile station, said current protocol data unit comprises no characteristic information of said mobile station.

5. A method as claimed in claim 2 or 3, wherein said network device is a base station, said burst is a downlink burst for carrying data to be sent to at least one mobile station;
said step b further comprises:

packaging characteristic information of the mobile station to which said current protocol data unit corresponds, into said current protocol data unit;
wherein said connection identifier information comprises assistant indicating information, associated with said characteristic information of said mobile station, for indicating logic connections of corresponding data.

6. A method as claimed in claim 2 or 3, wherein said network device is a mobile station, said burst is an uplink burst, said current protocol data unit comprises no characteristic information of said mobile station.

7. A method as claimed in claim 2 or 3, wherein said network device is a mobile station, said burst is an uplink burst;
said step b further comprises:

packaging said characteristic information of said mobile station into said current protocol data unit;
wherein said connection identifier information comprises assistant indicating information, associated with said characteristic information of said mobile station, for indicating logic connections of corresponding data.

8. A method as claimed in any of claims 1 to 7, wherein said wireless network comprises wireless network based on IEEE 802.16 protocol.

9. A method, in a network device of a wireless network, for parsing a received data demodulated from a received burst, comprising steps of:

A. decomposing said received data into protocol data units;
B. identifying data packages in said protocol data units according to length information of said data packages;
C. mapping said data packages to corresponding logic connections, according to connection identifier information of said data packages.

10. A method as claimed in claim 9, wherein said step C further comprises:

mapping data packages in a protocol data unit to corresponding logic connections, according to characteristic information of mobile station and said connection identifier information of said data packages in said protocol data unit;
wherein said connection identifier information comprises assistant indicating information, associated with said characteristic information of said mobile station, for indicating logic connections of corresponding data.

11. A method as claimed in claim 9 or 10, wherein said step A further comprises:

i. obtaining a given value;
ii. dividing said received data into segments and recognizing said segments as protocol data units, in the case that total length of said received data is not less than said given value, wherein length of the last segment is not more than said given value and length of other segments is equal to said given value; or
ii'. recognizing said received data as one protocol data unit, in the case that total length of said received data is less than said given value.

12. A method as claimed in any of claims 9 to 11, wherein said wireless network comprises wireless network based on IEEE 802.16 protocol.

13. A data configuring apparatus, in a network device of a wireless network, for configuring a protocol data unit, comprising:

a first judging means, for judging whether to assign data of different logic connections to be sent to a same counterpart device into a current protocol data unit;
a data packaging means, for packaging said data of different logic connections to be sent to said same counterpart device and connection identifier information for indicating said logic connections into said current protocol data unit if said data of different logic connections to be sent to said same counterpart device is needed to be assigned into said current data protocol unit.

14. A data configuring apparatus as claimed in claim 13, wherein said different logic connections comprises a first logic connection and a second logic connection;
said data configuring apparatus further comprises:

a first obtaining means, for obtaining length information of at least one protocol data unit carried in a burst;
said first judging means further comprises:

a second judging means, for judging whether the margin of length of said current protocol data unit minus length of data of said first logic connection to be assigned is more than a predetermined value;

a first determining means, for determining to assign said data of said first logic connection to be assigned and at least part of data of said second logic connection into said current protocol data unit in the case that said margin of length of said current protocol data unit minus length of data of said first logic connection to be assigned is more than said predetermined value.

15. A data configuring apparatus as claimed in claim 14, wherein said first obtaining means is further used for determining said length information of each protocol data unit carried in said burst, based on a given value and total length of data carried in said burst; wherein length information of first M protocol data units in said burst is determined as said given value, and length information of last N protocol data units in said burst is determined as O, wherein O, M, N are given by following equations:

$$M = \lfloor T/S \rfloor;$$

$$N = \lceil T/S \rceil - \lfloor T/S \rfloor;$$

$$O = T - S \times M;$$

wherein, T is said total length of data carried in said burst, S is said given value, $\lceil \cdot \rceil$ is the functor of ceiling rouding, $\lfloor \cdot \rfloor$ is the functor of floor rounding.

16. A data configuring apparatus as claimed in claim 14 or 15, wherein said network device is a base station, said burst is a downlink burst for carrying data to be sent to a mobile station, said current protocol data unit comprises no characteristic information of said mobile station.

17. A data configuring apparatus as claimed in claim 14 or 15, wherein said network device is a base station, said burst is a downlink burst for carrying data to be sent to at least one mobile station; said data packaging means is further used for packaging characteristic information of the mobile stations to which said current protocol data unit corresponds, into said current protocol data unit; wherein said connection identifier information comprises assistant indicating information, associated with said characteristic information of said mobile station, for indicating logic connections of corresponding data.

18. A data configuring apparatus as claimed in claim 14 or 15, wherein said network device is a mobile station, said burst is an uplink burst, said current protocol data unit comprises no characteristic information of said mobile station.

19. A data configuring apparatus as claimed in claim 14 or 15, wherein said network device is a mobile station, said burst is a uplink burst; said data packaging means is further used for packaging said characteristic information of said mobile station into said current protocol data unit; wherein said connection identifier information comprises assistant indicating information, associated with said characteristic information of said mobile station, for indicating logic connections of corresponding data.

20. A data configuring apparatus as claimed in any of claims 13 to 19, wherein said wireless network comprises wireless network based on IEEE 802.16 protocol.

21. A data parsing apparatus, in a network device of a wireless network, for parsing a received data demodulated from a received burst, comprising:

a first decomposing means, for decomposing said received data into protocol data units; a data package identifying means, for identifying data packages in said protocol data units according to length information of said data packages; a mapping means, for mapping said data packages to corresponding logic connections, according to connection identifier information of said data packages.

22. A data parsing apparatus as claimed in claim 21, wherein said mapping means is further used for mapping data packages in a protocol data unit to corresponding logic connections, according to characteristic information of mobile station and said connection identifier information of said data packages in said protocol data unit; wherein said connection identifier information comprises assistant indicating information, associated with said characteristic information of said mobile stations, for indicating logic connections of corresponding data.

23. A data parsing apparatus as claimed in claim 21 or 22, wherein said first decomposing means further comprises:

a second obtaining means, for obtaining a given value; a second decomposing means, for dividing said received data into segments and recognizing said segments as protocol data units, in the case that total length of said received data is not less than said given value, wherein length of the last segment is not more than said given value and length of other segments is equal to said given value;

said second decomposing means is alternatively used for recognizing said received data as one protocol data unit, in the case that total length of said received data is less than said given value.

24. A data parsing apparatus as claimed in any of claims 21 to 23, wherein said wireless network comprises wireless network based on IEEE 802.16 protocol.

25. A network device in a wireless network, comprising a data configuring apparatus as claimed in any of claims 13 to 20, for configuring a protocol data unit, and/or a data parsing apparatus as claimed in any of claims 21 to 24, for parsing a received data demodulated from a received burst.

EP 2 302 862 A1

| HT(1) | EC(1) | Type(6) | ESF(1) | CT(1) | EKS (2) | RSV(1) | LEN MSB (3) |
|---|---|---|---|---|---|---|---|
| LEN LSB(8) | | | CID MSB(8) | | | | |
| CID LSB(8) | | | HCS(8) | | | | |

Figure 1

| Frame n—1 | Frame n | Frame n+1 |
|---|---|---|

←————Down Link subFrame————→  ←——————Up Link subFrame——————→

| Preamble | FCH | DL Burst #1 | ... | DL Burst #N | TTG | | Bandwidth requst | UL Burst #1 | ... | UL Burst #M | RTG |

↑ Ranging

| DL-MAP | UL-MAP |

Figure 2

Figure 3

Figure 4

| R | R | R | R | MS ID MSB (4) |
|---|---|---|---|---|
| | | | MS ID LSB(8) | |

**Figure 5**

| R | R | L | SCID(5) | |
|---|---|---|---|---|
| | LEN MSB(8) | | | |
| LEN LSB (3) | | FC (2) | SN (3) | |

**Figure 6**

| R | R | L | SCID (5) |
|---|---|---|----------|
| LEN MSB (8) ||||
| LEN LSB (3) | FC (2) || SN MSB (3) |
| SN LSB (8) ||||

**Figure 7**

```
Obtaining length
information of protocol          ⌐ S10
data unit in a burst
```

```
Judging whether to assign data of different
logic connections to be sent to a same          ⌐ S11
counterpart device into a current protocol data
unit
```

```
Packaging data and               ⌐ S12
corresponding connection
identifier information into
current protocol data unit
```

**Figure 8**

decomposing the received data into protocol data units; — S20

identifying data packages in the protocol data units according to length information of the data packages; — S21

mapping the data packages to corresponding logic connections according to connection identifier information of the data packages. — S22

**Figure 9**

first obtaining means **100**

second judging means **1011**

first determining means **1012**

first judging means**101**

data packaging means **102**

data configuring apparatus **10**

second obtaining means 2001

second decomposing means 2002

first decomposing means 200

data package identifying means 201

mapping means 202

data parsing apparatus 20

**Base station 1**

Figure 10

# INTERNATIONAL SEARCH REPORT

| International application No. |
| --- |
| PCT/CN2008/001300 |

**A. CLASSIFICATION OF SUBJECT MATTER**

H04L 29/06 (2006.01) i

According to International Patent Classification (IPC) or to both national classification and IPC

**B. FIELDS SEARCHED**

Minimum documentation searched (classification system followed by classification symbols)

IPC: H04L;H04Q;H04M

Documentation searched other than minimum documentation to the extent that such documents are included in the fields searched

Electronic data base consulted during the international search (name of data base and, where practicable, search terms used)

WPI,PAJ,EPODOC,IEEE,CNPAT,CNKI: protocol w data w unit, identifier, connection, packet, encapsulat+, multiplex+

**C. DOCUMENTS CONSIDERED TO BE RELEVANT**

| Category* | Citation of document, with indication, where appropriate, of the relevant passages | Relevant to claim |
| --- | --- | --- |
| X | CN1914879A (LG ELECTRONICS INC.) 14 Feb. 2007 (14.02.2007) page 10 line 2 to page 15 line 20 in description, figures 10-11 | 1,8-10,12-13,20-2 2,24-25 |
| A | CN101166193A (DATANG MOBILE COMM EQUIP CO.) 23 Apr.2008 (23.04.2008) the whole document | 1-25 |
| A | CN101175071A (ZTE CORP.) 07 May 2008 (07.05.2008) the whole document | 1-25 |
| A | CN1322424A (NOKIA CORP.) 14 Nov.2001 (14.11.2001) the whole document | 1-25 |
| A | WO2007/121026A2 (MOTOROLA INC.) 25 Oct.2007 (25.10.2007) the whole document | 1-25 |
| A | WO2008/082013A1 (NTT DOCOMO,INC.) 10 Jul.2008 (10.07.2008) the whole document | 1-25 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 Sep. 2008 (28.09.2008) | **30 Oct. 2008 (30.10.2008)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer YAN,Yan Telephone No. (86-10)62413129 |

Form PCT/ISA/210 (second sheet) (April 2007)

**INTERNATIONAL SEARCH REPORT**
Information on patent family members

International application No.

PCT/CN2008/001300

| Patent Documents referred in the Report | Publication Date | Patent Family | Publication Date |
|---|---|---|---|
| CN1914879A | 14.02.2007 | AU2005253494A | 22.12.2005 |
| | | BRPI0506845A | 12.06.2007 |
| | | EP1700455 A1 | 13.09.2006 |
| | | JP2008503174T T | 31.01.2008 |
| | | KR20050118594A | 19.12.2005 |
| | | MXPA06006687A | 18.08.2006 |
| CN101166193A | 23.04.2008 | NONE | |
| CN101175071A | 07.05.2008 | NONE | |
| CN1322424A | 14.11.2001 | AT265775T T | 15.05.2004 |
| | | AU6091799A | 26.04.2000 |
| | | CA2344594A1 | 13.04.2000 |
| | | DE69916870D D1 | 03.06.2004 |
| | | DE69916870T T2 | 31.03.2005 |
| | | EP1119948A1 | 01.08.2001 |
| | | ES2220115T T3 | 01.12.2004 |
| | | FI982167A | 07.04.2000 |
| | | JP2002527945T T | 27.08.2002 |
| | | US7359403B1 | 15.04.2008 |
| | | US2008144556A1 | 19.06.2008 |
| | | WO0021253A1 | 13.04.2000 |
| WO2007/121026A2 | 25.10.2007 | US2007242635A1 | 18.10.2007 |
| WO2008/082013A1 | 10.07.2008 | JP2008172296A | 24.07.2008 |

Form PCT/ISA/210 (patent family annex) (April 2007)